# EUROPÄISCHE PATENTSCHRIFT

(11) **EP 1 295 741 B1**
(45) Veröffentlichungstag und Bekanntmachung des Hinweises auf die Patenterteilung: **07.06.2006**
(21) Anmeldenummer: 02017441.3
(22) Anmeldetag: 03.08.2002
(51) Int. Cl.: B60H 3/06

(54) **Desorbierbarer Adsorptionsfilter und Verfahren zum Steuern und/oder Regeln des Desorptionsvorgangs eines desorbierbaren Adsorptionsfilters**
Desorbable adsorption filter and method for controlling the process of desorption of such a filter
Filtre d'adsorption désorbable et procédé pour contrôler le procédé de désorption d'un tel filtre

(30) Priorität: 19.09.2001 DE 10146081
(43) Veröffentlichungstag der Anmeldung: 26.03.2003
(73) Patentinhaber: Behr GmbH & Co. KG, 70469 Stuttgart (DE)
(72) Erfinder: Angermann, Hans-H., Dr.rer.nat., 70197 Stuttgart (DE); Burk, Roland, Dipl.-Phys., 70469 Stuttgart (DE)
(74) Vertreter: Grosse, Rainer

(56) Entgegenhaltungen:
- EP-A- 0 798 143
- DE-A- 10 041 598
- DE-A- 19 838 996
- US-A- 5 400 964

## Beschreibung

Die vorliegende Erfindung betrifft einen desorbierbaren Adsorptionsfilter, insbesondere für eine Kraftfahrzeug-Klimaanlage, mit einem Gehäuse in dem zumindest ein Sorptionsfilterelement angeordnet ist, das in einem Desorptionsmodus zur Desorption erwärmbar ist, und mit einem ersten Temperatursensor, der zumindest im Desorptionsmodus die Temperatur von zumindest einem ersten Abschnitt des Sorptionsfilterelements erfasst.

Ferner betrifft die Erfindung eine Fahrzeugklimaanlage mit einem derartigen Adsorptionsfilter sowie ein Verfahren zum Steuern und/oder Regeln des Desorptionsvorgangs eines desorbierbaren Adsorptionsfilters, in dem zumindest ein Sorptionsfilterelement angeordnet ist, das in einem Desorptionsmodus zur Desorption erwärmt wird.

Beispielsweise im Zusammenhang mit Kraftfahrzeug-Klimaanlagen, die der Erhöhung des Komforts bezüglich der Lufttemperatur, der Luftfeuchte und der Luftqualität dienen, werden zur Erhöhung der Luftqualität Filtersysteme eingesetzt, um die Luft von festen und gasförmigen Geruchs-, Reiz- und Schadstoffen zu befreien. Zur Aufrechterhaltung der Funktion müssen die Filter beim Stand der Technik noch relativ häufig ausgetauscht werden. Als Geruchsfilter werden üblicherweise Aktivkohlefilter eingesetzt. Diese erfüllen in erster Linie die Funktion einer Pufferung geruchsrelevanter Stoffe. Dabei werden Konzentrationsspitzen gekappt, und die adsorbierten Stoffe werden bei geringer Außenluftkonzentration unterhalb der Geruchsschwelle wieder langsam abgegeben. Derartige Aktivkohlefilter sind daher keine Filter, die sich positiv auf die Gesundheit auswirken. Zur Reduktion der integralen Belastung beispielsweise von Fahrzeuginsassen durch gesundheitlich relevante Schadstoffe (beispielsweise Benzol und polyzyklische aromatische Kohlenwasserstoffe sowie NO₂, SO₂, und so weiter) werden derzeit im Wesentlichen zwei Zielrichtungen verfolgt. Zum einen wird eine Oxidation an katalytisch wirkenden Oberflächen hervorgerufen. Zum anderen werden die gattungsgemäßen desorbierbaren Adsorptionsfilter eingesetzt, die zumindest ein Sorptionsfilterelement aufweisen. Aus der DE 4 214 246 A1, der DE 3 517 105 C1 und der DE 195 17 016 A1 ist es bereits bekannt, derartige Sorptionsfilterelemente zyklisch in Adsorptions- und in Desorptionsmodus zu betreiben. Aus der DE 195 46 672 A1 ist es bereits bekannt, ein Sorptionsfilterelement kontinuierlich im Adsorptions- und im Desorptionsmodus zu betreiben. Die Desorption findet beispielsweise durch Heißluftzufuhr oder durch eine Direktbeheizung des Sorptionsfilterelements statt, wie dies beispielsweise in der DE 195 17 016 A1 vorgeschlagen ist. Durch die Desorption wird ein Großteil der adsorbierten Gase ausgetrieben und an die Umgebung abgegeben. Um eine ausreichende Desorption des Sorptionsfilterelementes zu erzielen, muss dieses beispielsweise auf eine Temperatur im Bereich von 200°C aufgeheizt und einige Minuten auf dieser Temperatur gehalten werden. Es ist vorteilhaft, das Sorptionsfilterelement in dieser Phase zum Abtransport der desorbierten Gase mit einer geringen Luftmenge zu spülen. Im Desorptionsmodus darf jedoch eine gewisse Temperatur des Sorptionsfilterelementes nicht überschritten werden, da es anderenfalls zu einer Selbstaufheizung des Sorptionsfilterelementes durch exotherme Reaktionen kemmen kann, die unter Umständen die Bildung von Hotspots beziehungsweise heißen Bereichen verursachen können, die zu einem Brandrisiko führen können. Um derartige Zustände erkennen und gegebenenfalls Gegenmaßnahmen einleiten zu können wurde bereits vorgeschlagen, mehrere punktuell messende Temperatursensoren an unterschiedlichen Stellen des Sorptionsfilterelementes vorzusehen. Dabei sind jedoch die folgenden Probleme aufgetreten:
- Die Temperaturverteilung im Sorptionsfilterelement kann sich zeitlich und örtlich verändern.
- Die Trägheit der Temperaturmessung kann aufgrund eines schlechten Wärmekontaktes und einer großen Wärmekapazität zu groß sein.
- Aufgelötete Temperatursensoren können sich durch den Temperatureinfluss und/oder durch Vibrationen von der Trägerstruktur beziehungsweise dem Sorptionsfilterelement ablösen.
- Aus Sicherheitsgründen müssen mehrere Sensoren pro Sorptionsfilterelement eingesetzt werden, was die Kosten erhöht.
- Bei einem Wechsel des Sorptionsfilterelementes müssen die an und/oder in dem Sorptionsfilterelement angeordneten Temperatursensoren mitgewechselt werden.
- Bei einem Ausfall eines Temperatursensors muss das Sorptionsfilterelement mitgewechselt werden.

Aus der DE 198 38 996 A geht als nächster Stand der Technik ein Adsorptionsfilter mit einem Temperatursensor im Gehäuse des Filterelements hervor.

Der Erfindung liegt die **Aufgabe** zugrunde, die gattungsgemäßen desorbierbaren Adsorptionsfilter und die gattungsgemäßen Verfahren zum Steuern und/oder Regeln des Desorptionsvorgangs eines desorbierbaren Adsorptionsfilters derart weiterzubilden, dass die beim Stand der Technik auftretenden Probleme vermieden werden können.

Diese Aufgabe wird durch die in den unabhängigen Ansprüchen angegebenen Merkmale gelöst.

Vorteilhafte Ausgestaltungen und Weiterbildungen der Erfindung ergeben sich aus den Unteransprüchen.

Der erfindungsgemäße desorbierbare Adsorptionsfilter baut auf dem gattungsgemäßen Stand der Technik dadurch auf, dass zumindest ein berührungslos arbeitender erster Temperatursensor vorgesehen ist, der an dem Gehäuse angeordnet ist und der zumindest im Desorptionsmodus die Temperatur von zumindest einem ersten Abschnitt des zumindest einen Sorptionsfilterelements erfasst. Sofern nur ein Temperatursensor verwendet wird deckt der erste Abschnitt vorzugsweise das gesamte Sorptionsfilterelement ab. Dadurch können zeitliche und örtliche Änderungen der Temperaturverteilung in dem Sorptionsfilterelement schnell erfasst werden. Die T⁴-Charakteristik der abgestrahlten Leistung trägt dabei dazu bei, dass schon bei kleinflächigen Erwärmungen, die beispielsweise durch irreguläre exotherme Reaktionen hervorgerufen werden können, das Temperatursignal des Temperatursensors durch den Bereich der kleinflächigen Erwärmung dominiert wird. Dadurch, dass der zumindest eine Temperatursensor an dem Gehäuse angeordnet ist, können der Temperatursensor und das Sorptionsfilterelement unabhängig voneinander gewechselt werden.

Bei bevorzugten Ausführungsformen des erfindungsgemäßen desorbierbaren Adsorptionsfilters ist jedoch vorgesehen, dass ein zweiter berührungslos arbeitender Temperatursensor vorgesehen ist, der zumindest im Desorptionsmodus die Temperatur von zumindest einem zweiten Abschnitt des zumindest einen Sorptionsfilterelements erfasst. Durch die Verwendung von zwei unabhängigen Temperatursensoren ist es möglich, die Funktionsweise der Temperatursensoren, und insbesondere auch die örtliche und/oder zeitliche Homogenität der Filtererwärmung, durch einen Vergleich der Temperatursignale zu überwachen.

Insbesondere in diesem Zusammenhang ist bei dem erfindungsgemäßen desorbierbaren Adsorptionsfilter vorzugsweise weiterhin vorgesehen, dass der erste Abschnitt und der zweite Abschnitt aneinander angrenzen oder überlappen. Dabei sind der erste Abschnitt und der zweite Abschnitt vorzugsweise derart gewählt, dass das gesamte Sorptionsfilterelement abgedeckt wird.

Besonders gute Ergebnisse werden mit dem erfindungsgemäßen desorbierbaren Adsorptionsfilter erzielt, wenn vorgesehen ist, dass zumindest der erste berührungslos arbeitende Temperatursensor ein Thermopilesensor ist. Thermopilesensoren sind Bauelemente, die Wärmestrahlung in eine Spannung umwandeln.

Sofern bei dem erfindungsgemäßen desorbierbaren Adsorptionsfilter zwei Temperatursensoren verwendet werden, ist vorzugsweise vorgesehen, dass der erste berührungslos arbeitende Temperatursensor und der zweite berührungslos arbeitende Temperatursensor durch einen Dualzonen-Thermopilesensor gebildet sind. Derartige Dualzonen-Thermopilesensoren, die in einem gemeinsamen Gehäuse untergebracht sind, sind kostengünstiger als zwei separate Thermopilesensoren.

Insbesondere in diesem Zusammenhang ist bei dem erfindungsgemäßen desorbierbaren Adsorptionsfilter weiterhin vorgesehen, dass der Dualzonen-Thermopilesensor zwei Auswerteeinheiten aufweist. Dadurch wird zum einen eine Redundanz geschaffen und zum anderen kann die korrekte Funktionsweise der Auswerteeinheiten beziehungsweise Signalverarbeitungssysteme durch geeignete Signalvergleiche überwacht werden.

Bei bevorzugten Ausführungsformen des erfindungsgemäßen desorbierbaren Adsorptionsfilters ist vorgesehen, dass zumindest der erste berührungslos arbeitende Temperatursensor auf einer Reinluftseite des zumindest einen Sorptionsfilterelements angeordnet ist. Sofern zwei Temperatursensoren vorgesehen sind, sind vorzugsweise beide Temperatursensoren auf der Reinluftseite des zumindest einen Sorptionsfilterelements angeordnet. Auf diese Weise kann eine Verschmutzung des Temperatursensores beziehungsweise der Temperatursensoren vermieden oder zumindest stark eingeschränkt werden.

Bei bestimmten Ausführungsformen des erfindungsgemäßen desorbierbaren Adsorptionsfilters ist vorgesehen, dass er eine Steuerungs- und/oder Regelungseinrichtung aufweist, der ein erstes Temperatursignal des ersten berührungslos arbeitenden Temperatursensors und ein zweites Temperatursignal des zweiten berührungslos arbeitenden Temperatursensors zugeführt wird, und dass die Steuerungs- und/oder Regelungseinrichtung zumindest im Desorptionsmodus die Temperatur des zumindest einen Sorptionsfilterelements auf der Grundlage des ersten Temperatursignals und des zweiten Temperatursignals steuert und/oder regelt. Die Steuerungs- und/oder Regelungseinrichtung kann dabei in oder an dem Gehäuse oder räumlich getrennt von diesem angeordnet sein.

Bei bevorzugten Ausführungsformen des erfindungsgemäßen desorbierbaren Adsorptionsfilters ist in diesem Zusammenhang vorgesehen, dass die Steuerungs- und/oder Regelungseinrichtung zumindest im Desorptionsmodus die Aufheizung beziehungsweise die Temperatur des zumindest einen Sorptionsfilterelements auf der Grundlage einer Differenz aus dem ersten Temperatursignal und dem zweiten Temperatursignal überwacht beziehungsweise steuert und/oder regelt. Eine derartige Differenzbildung wird als besonders vorteilhaft angesehen, weil sie unter anderem die gegenseitige Überprüfung der beiden Temperatursensoren ermöglicht. Weiterhin zeigt sich irgendeine Irregularität in der Erwärmungscharakteristik am schnellsten in der Differenz der Temperatursignale. Wie bereits erwähnt bewirkt die T⁴⁻Charakteristik der abgestrahlten Leistung, dass schon bei kleinflächigen Erwärmungen, die beispielsweise durch irreguläre exotherme Reaktionen hervorgerufen werden können, das Gesamtsignal desjenigen Thermopile-Temperatursensors dominiert, in dessen Blickfeld diese Zone liegt. Wenn sich beispielsweise nur ein Zehntel der überwachten Fläche auf eine ungewollt hohe Temperatur von beispielsweise 300°C erwärmt, beispielsweise anstelle von regulären 200°C, überhöht sich entsprechend dem T⁴⁻Gesetz die abgestrahlte Leistung so stark, dass sich der Thermopile-Temperatursensor auf einen Temperaturmittelwert von beispielsweise 285°C einstellt. Dadurch wird eine große Differenz zwischen den Temperatursignalen der beiden Thermopile-Temperatursensoren hervorgerufen und es ist beispielsweise möglich, das System sofort abzuschalten und/oder in einen Störungsmodus zu wechseln.

Bei einer bevorzugten Ausführungsform des erfindungsgemäßen desorbierbaren Adsorptionsfilters ist weiterhin vorgesehen, dass die Steuerungs- und/oder Regelungseinrichtung den Betrag der Differenz aus dem ersten Temperatursignal und dem zweiten Temperatursignal mit einem ersten Schwellenwert vergleicht, und dass die Steuerungs- und/oder Regelungseinrichtung in einen Störungsmodus wechselt, wenn der Betrag der Differenz aus dem ersten Temperatursignal und dem zweiten Temperatursignal größer als der ersten Schwellenwert ist. Der erste Schwellenwert wird dabei je nach Anwendungsfall gewählt und kann beispielsweise im Bereich von 10 K bis 200 K liegen. Durch die Wahl des ersten Schwellenwertes kann insbesondere auch die Empfindlichkeit des gegenüber irregulären Aufheizungen eingestellt werden.

Insbesondere im vorstehend erläuterten Zusammenhang kann bei dem erfindungsgemäßen desorbierbaren Adsorptionsfilter weiterhin vorgesehen sein, dass die Steuerungs- und/oder Regelungseinrichtung eine Maximumtemperatur aus dem ersten Temperatursignal und dem zweiten Temperatursignal bestimmt.

In diesem Zusammenhang ist bei dem erfindungsgemä-ßen desorbierbaren Adsorptionsfilter vorzugsweise weiterhin vorgesehen, dass die Steuerungs- und /oder Regelungseinrichtung die Maximumtemperatur mit einem zweiten Schwellenwert vergleicht, und dass die Steuerungs- und/oder Regelungseinrichtung die die Erwärmung des zumindest einen Sorptionsfilterelements bewirkende Heizleistung auf einen Normwert setzt, wenn die Maximumtemperatur größer als der zweite Schwellenwert ist, während die Steuerungs- und/oder Regelungseinrichtung die Heizleistung auf einen Maximalwert setzt, wenn die Maximumtemperatur kleiner als der zweite Schwellenwert ist. Dabei kann der zweite Schwellenwert beispielsweise 150°C betragen.

Bei einer vorteilhaften Weiterbildung des erfindungsgemäßen desorbierbaren Adsorptionsfilters ist in diesem Zusammenhang vorzugsweise weiterhin vorgesehen, dass die Steuerungs- und/oder Regelungseinrichtung erneut die Maximumtemperatur bestimmt, nachdem sie die Heizleistung auf den Normwert gesetzt hat, um die Maximumtemperatur mit einem dritten Schwellenwert zu vergleichen, und dass die Steuerungs- und/oder Regelungseinrichtung die Heizleistung verringert, insbesondere auf Null, wenn die Maximumtemperatur größer als der dritte Schwellenwert ist. Der dritte Schwellenwert wird vorzugweise größer als der zweite Schwellenwert gewählt, wobei der dritte Schwellenwert beispielsweise 5 bis 50 °C größer als der zweite Schwellenwert sein kann.

Im vorstehend erläuterten Zusammenhang ist bei dem erfindungsgemäßen desorbierbaren Adsorptionsfilter vorzugsweise weiterhin vorgesehen, dass die Steuerungs- und/oder Regelungseinrichtung erneut die Maximumtemperatur bestimmt, nachdem sie die Heizleistung verringert hat, um die Maximumtemperatur mit einem vierten Schwellenwert zu vergleichen, und dass die Steuerungs- und/oder Regelungseinrichtung in den Störungsmodus wechselt, wenn die Maximumtemperatur größer als der vierte Schwellenwert ist. Der vierte Schwellenwert wird vorzugsweise größer als der dritte Schwellenwert und somit auch größer als der zweite Schwellenwert gewählt. Ein typischer Wert für den vierten Schwellenwert liegt zwischen 200°C und 300°C und beträgt beispielsweise 220°C.

Im Zusammenhang mit dem bereits erwähnten Störungsmodus kann bei dem erfindungsgemäßen desorbierbaren Adsorptionsfilter vorgesehen sein, dass die Steuerungs- und/oder Regelungseinrichtung in dem Störungsmodus eine Luftzufuhr zu dem zumindest einen Sorptionsfilterelement zumindest für eine vorherbestimmte Zeitspanne verhindert oder zumindest einschränkt. Die beispielsweise durch Verstellung der Luftklappen in eine Stellung mit minimaler Durchströmung des Filters und/oder das Abschalten eines Gebläses unterbundene Luftzufuhr zum Sorptionsfilterelement kann insbesondere so lange erfolgen, bis ein Temperaturfenster mit einer erhöhten Neigung zur reaktiven Selbstaufheizung des Sorptionsfilterelementes wieder verlassen wurde. Ein typischer Wert für diese vorherbestimmte Zeitspanne kann beispielsweise 2 Minuten betragen.

Zusätzlich oder alternativ kann bei dem erfindungsgemäßen desorbierbaren Adsorptionsfilter vorgesehen sein, dass die Steuerungs- und/oder Regelungseinrichtung in dem Störungsmodus ein Warnsignal ausgibt und/oder weitere Desorptionsmodi verhindert. Sofern es sich um eine Kraftfahrzeug-Klimaanlage handelt, kann das Warnsignal beispielsweise ein im Armaturenbrett des Kraftfahrzeugs vorgesehenes optisches Warnsignal sein. Zusätzlich oder alternativ kommen auch akustische Warnsignale in Frage. Aus Sicherheitsgründen kann es bei bestimmten Ausführungsformen sinnvoll sein, weitere Desorptionsmodi zu verhindern, bis beispielsweise eine Wartung vorgenommen wurde.

Ebenfalls kann vorgesehen sein, dass der Störmodus in zwei Teilmodi unterteilt ist, wobei der erste Teilmodus einen Dauerstop mit einer akustischen und/oder optischen Störmeldung umfasst und angewendet wird, wenn der erste Schwellenwert überschritten wird, und wobei der zweite Teilmodus bei der Überschreitung des vierten Schwellenwertes angewendet wird und eine schrittweise Absenkung des zweiten und dritten Schwellenwertes und einen Rücksprung zum normalen Steuerungs- und/oder Regelungsmodus umfasst. Das Absenken des zweiten und dritten Schwellenwertes kann dabei insbesondere solange erfolgen, bis der vierte Schwellenwert nicht mehr überschritten wird und der Störmodus nur noch durch die Überschreitung des ersten Schwellenwertes erreicht wird. Letzteres führt vorzugsweise dazu, dass weitere Desorptionsmodi verhindert werden.

Bei einer bestimmten Weiterbildung des erfindungsgemäßen desorbierbaren Adsorptionsfilters ist vorgesehen, dass die Steuerungs- und/oder Regelungseinrichtung einen PID-Regler aufweist, der die Heizleistung durch Pulsweitenmodulation entsprechend einem oder mehreren Schwellenwerten regelt.

In diesem Zusammenhang kann bei dem erfindungsgemäßen desorbierbaren Adsorptionsfilter weiterhin vorgesehen sein, dass die Steuerungs- und/oder Regelungseinrichtung eine getrennte Auswertung des D-Anteils vornimmt, um auf Anomalien in der zeitlichen Erwärmungscharakteristik des zumindest einen Sorptionsfilterelements zu schließen.

Das erfindungsgemäße Verfahren zum Steuern und/oder Regeln des Desorptionsvorgangs eines desorbierbaren Adsorptionsfilters baut auf dem gattungsgemäßen Stand der Technik dadurch auf, dass es den folgenden Schritt umfasst:
a) berührungsloses Erfassen der Temperatur von zumindest einem ersten Abschnitt des zumindest einen Sorptionsfilterelements und Steuern und/oder Regeln der Temperatur des zumindest einen Sorptionsfilterelements durch Einstellen der Heizleistung, die die Erwärmung des zumindest einen Sorptionsfilterelements bewirkt,
b) berührungsloses Erfassen der Temperatur eines zweiten Abschnitts des zumindest einen Sorptionsfilterelements, und
c) Bilden einer Differenz aus der ersten Temperatur und der zweiten Temperatur und Steuern und/oder Regeln der Temperatur des zumindest einen Sorptionsfilterelements auf der Grundlage dieser Differenz.

Durch diese Lösung ergeben sich ähnlich wie bei dem erfindungsgemäßen desorbierbaren Adsorptionsfilter die folgenden Vorteile beziehungsweise Eigenschaften.

Die erfindungsgemäße Verwendung von zwei unabhängigen Temperatursensoren und aneinanderangrenzenden oder überlappenden ersten und zweiten Abschnitten hat den Vorteil, dass es möglich ist, die Funktionsweise der Temperatursensoren durch einen Vergleich der Temperatursignale zu überwachen. Dabei sind der erste Abschnitt und der zweite Abschnitt vorzugsweise derart gewählt, dass das gesamte Sorptionsfilterelement abgedeckt wird. Das Bilden einer Differenz ist wie erwähnt vorteilhaft, weil sie unter anderem die gegenseitige Überprüfung der beiden Temperatursensoren ermöglicht. Weiterhin zeigt sich irgendeine Irregularität in der Erwärmungscharakteristik am schnellsten in der Differenz der Temperatursignale. Wie bereits erwähnt, bewirkt die T⁴-Charakteristik der abgestrahlten Leistung, dass schon bei kleinflächigen Erwärmungen, die beispielsweise durch irreguläre exotherme Reaktionen hervorgerufen werden können, das Gesamtsignal desjenigen Thermopile-Temperatursensors dominiert, in dessen Blickfeld diese Zone liegt. Wenn sich beispielsweise nur ein Zehntel der überwachten Fläche auf eine ungewollt hohe Temperatur von beispielsweise 300°C erwärmt, beispielsweise anstelle von regulären 200°C, überhöht sich entsprechend dem T⁴-Gesetz die abgestrahlte Leistung so stark, dass sich der Thermopile-Temperatursensor auf einen Temperaturmittelwert von beispielsweise 285°C einstellt. Dadurch wird eine große Differenz zwischen den Temperatursignalen der beiden Thermopile-Temperatursensoren hervorgerufen und es ist beispielsweise möglich, das System sofort abzuschalten und/oder in einen Störungsmodus zu wechseln.

Eine vorteilhafte Weiterbildung des erfindungsgemä-ßen Verfahrens sieht vor, dass es weiterhin die folgenden Schritte umfasst:
d) Vergleichen des Betrages der Differenz aus dem ersten Temperatursignal und dem zweiten Temperatursignal mit einem ersten Schwellenwert, und
e) Wechseln in einen Störungsmodus, wenn der Betrag der Differenz aus dem ersten Temperatursignal und dem zweiten Temperatursignal größer als der ersten Schwellenwert ist.

Auch in diesem Fall wird der erste Schwellenwert entsprechend dem jeweiligen Anwendungsfall gewählt, wobei ein typischer Bereich für den ersten Schwellenwert zwischen 10 K und 200 K, und insbesondere zwischen 10 K und 100 K liegt.

Vorzugsweise ist bei dem erfindungsgemäßen Verfahren vorgesehen, dass es weiterhin den folgenden Schritt umfasst:
f) Bestimmen einer Maximumtemperatur aus dem ersten Temperatursignal und dem zweiten Temperatursignal.

In diesem Zusammenhang sieht eine bevorzugte Weiterbildung des erfindungsgemäßen Verfahrens vor, dass es weiterhin die folgenden Schritte umfasst:
g) Vergleichen der Maximumtemperatur mit einem zweiten Schwellenwert, und
h) Setzen der die Erwärmung des zumindest einen Sorptionsfilterelements bewirkenden Heizleistung auf einen Normwert, wenn die Maximumtemperatur größer als der zweite Schwellenwert ist, und Setzen der Heizleistung auf einen Maximalwert, wenn die Maximumtemperatur kleiner als der zweite Schwellenwert ist.

Wie bei dem erfindungsgemäßen desorbierbaren Adsorptionsfilter kann der zweite Schwellenwert auch im Fall des erfindungsgemäßen Verfahrens beispielsweise im Bereich von 150°C liegen.

Weiterhin kann im Zusammenhang mit dem erfindungsgemäßen Verfahren vorgesehen sein, dass es die folgenden Schritte umfasst:
i) erneutes Bestimmen der Maximumtemperatur, nachdem die Heizleistung auf den Normwert gesetzt wurde,
j) Vergleichen der Maximumtemperatur mit einem dritten Schwellenwert, und
k) Verringern der Heizleistung, wenn die Maximumtemperatur größer als der dritte Schwellenwert ist.

Dabei erfolgt die Verringerung der Heizleistung vorzugsweise derart, dass die Heizleistung auf Null gesetzt wird. Ein typischer Wert für den dritten Schwellenwert kann auch in diesem Fall durch 200°C gegeben sein. Selbstverständlich sind auch andere Werte möglich, beispielsweise Werte zwischen 200°C und 300°C.

Das erfindungsgemäße Verfahren kann weiterhin die folgenden Schritte umfassen:
l) erneutes Bestimmen der Maximumtemperatur, nachdem die Heizleistung verringert wurde,
m) Vergleichen der Maximumtemperatur mit einem vierten Schwellenwert, und
n) Wechselnd in den Störungsmodus, wenn die Maximumtemperatur größer als der vierte Schwellenwert ist.

Der vierte Schwellenwert wird vorzugsweise ähnlich wie bei dem erfindungsgemäßen desorbierbaren Adsorptionsfilter gewählt und beträgt beispielsweise 220°C.

Im Zusammenhang mit dem erfindungsgemäßen Verfahren kann vorgesehen sein, dass es weiterhin den folgenden Schritt umfasst:
o) Verhindern oder zumindest Einschränken einer Luftzufuhr zu dem zumindest einen Sorptionsfilterelement, zumindest für eine vorherbestimmte Zeitspanne, in dem Störungsmodus.

Die beispielsweise durch das Abschalten eines Gebläses verursachte Unterbindung der Luftzufuhr zum Sorptionsfilterelement kann insbesondere so lange erfolgen, bis ein Temperaturfenster mit einer erhöhten Neigung zur reaktiven Selbstaufheizung des Sorptionsfilterelementes wieder verlassen wurde. Ein typischer Wert für diese vorherbestimmte Zeitspanne kann beispielsweise 2 Minuten betragen.

Optional kann bei dem erfindungsgemäßen Verfahren vorgesehen sein, dass es weiterhin den folgenden Schritt umfasst:
p) Ausgeben eines Warnsignals und/oder Verhindern weiterer Desorptionsmodi, in dem Störungsmodus.

Sofern es sich um eine Kraftfahrzeug-Klimaanlage handelt, kann das Warnsignal beispielsweise ein im Armaturenbrett des Kraftfahrzeugs vorgesehenes optisches Warnsignal sein. Ähnlich wie dies bereits im Zusammenhang mit dem erfindungsgemäßen desorbierbaren Adsorptionsfilter erläutert wurde. Zusätzlich oder alternativ kommen auch akustische Warnsignale in Frage. Aus Sicherheitsgründen kann es bei bestimmten Ausführungsformen sinnvoll sein, weitere Desorptionsmodi zu verhindern, bis beispielsweise eine Wartung vorgenommen wurde. Dies gilt insbesondere dann, wenn der Störmodus aufgrund einer Überschreitung des ersten Schwellenwertes erreicht wurde.

Ebenfalls kann vorgesehen sein, dass das Verfahren weiterhin den folgenden Schritt umfasst:
q) Aufteilen des Störmodus in zwei Teilmodi, wobei der erste Teilmodus einen Dauerstop mit einer akustischen und/oder optischen Störmeldung umfasst und angewendet wird, wenn der erste Schwellenwert überschritten wird, und wobei der zweite Teilmodus bei der Überschreitung des vierten Schwellenwertes angewendet wird und eine schrittweise Absenkung des zweiten und dritten Schwellenwertes und einen Rücksprung zum normalen Steuerungs- und/oder Regelungsmodus umfasst.

Das Absenken des zweiten und dritten Schwellenwertes kann dabei auch in diesem Fall insbesondere solange erfolgen, bis der vierte Schwellenwert nicht mehr überschritten wird und der Störmodus nur noch durch die Überschreitung des ersten Schwellenwertes erreicht wird. Letzteres führt auch im Zusammenhang mit dem erfindungsgemäßen Verfahren vorzugsweise dazu, dass weitere Desorptionsmodi verhindert werden.

Auch bei bestimmten Ausführungsformen des erfindungsgemäßen Verfahrens kann vorgesehen sein, dass ein PID-Regler verwendet wird, um die Heizleistung durch Pulsweitenmodulation entsprechend einem oder mehreren Schwellenwerten zu regeln.

Eine vorteilhafte Weiterbildung des erfindungsgemä-ßen Verfahrens sieht in diesem Zusammenhang vor, dass eine getrennte Auswertung des D-Anteils vorgenommen wird, um auf Anomalien in der zeitlichen Erwärmungscharakteristik des zumindest einen Sorptionsfilterelements zu schließen. Zum Beispiel wenn festgestellt wird, dass die Temperaturzunahme des Filterelements pro Zeiteinheit bezogen auf die eingebrachte Heizleistung zu groß ist.

Ausführungsbeispiele der Erfindung werden nachfolgend anhand der zugehörigen Zeichnungen näher erläutert.

Es zeigen:
- Figur 1: eine schematische Darstellung einer Ausführungsform des erfindungsgemäßen desorbierbaren Adsorptionsfilters;
- Figur 2: eine Darstellung, die die Lage eines durch einen ersten Temperatursensor abgedeckten ersten Abschnitts und eines durch einen zweiten Temperatursensor abgedeckten zweiten Abschnitts eines Sorptionsfilterelements veranschaulicht;
- Figur 3: ein Flussdiagramm, das einen Teil einer Ausführungsform des erfindungsgemäßen Verfahrens veranschaulicht;
- Figur 4: ein Flussdiagramm, das den Betrieb in einem Störungsmodus veranschaulicht; und
- Figur 5: einen Graph, der eine Temperaturverteilung mit einem Hotspot, die zugehörige Temperaturstrahlung, die zugehörige Leistungsverteilung und die mittlere Leistung für verschiedene Flächenelemente zeigt.

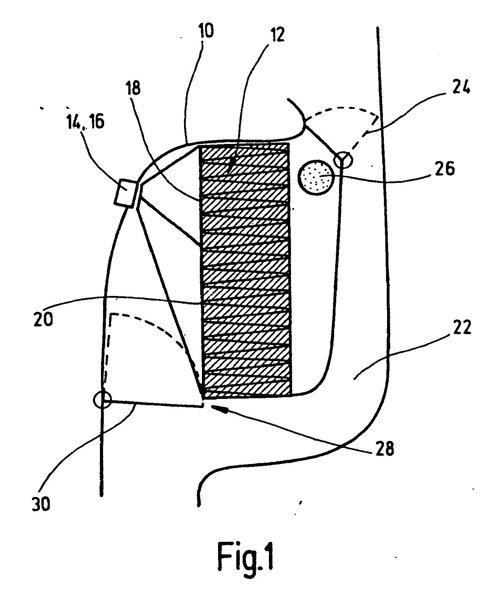

Figur 1 zeigt eine schematische Darstellung einer Ausführungsform des erfindungsgemäßen desorbierbaren Adsorptionsfilters. Der dargestellte desorbierbare Adsorptionsfilter, der auch im Zusammenhang mit dem erfindungsgemäßen Verfahren verwendet werden kann, weist ein Gehäuse 10 auf, in dem ein Sorptionsfilterelement 12 angeordnet ist. Benachbart zum Sorptionsfilterelement 12 sind zwei Temperatursensoren 14, 16 in Form eines Dualzonen-Thermopile-Temperatursensors vorgesehen. Der erste Temperatursensor 14 erfasst die Temperatur des Adsorptionsfilterelements 12 in einem ersten Abschnitt 18, während der zweite Temperatursensor 16 die Temperatur in einem zweiten Abschnitt 20 des Sorptionsfilterelements 12 erfasst. Auf der von den Temperatursensoren 14, 16 abgewandten Seite des Sorptionsfilterelements 12 ist eine Fortluftöffnung 26 für die Sorptionsgase vorgesehen. Benachbart zu dieser Fortluftöffnung 26 ist eine Rohluftklappe 24 angeordnet, mit der ein Bypasskanal 22 ganz oder teilweise geöffnet oder verschlossen werden kann. Eine Abschöpfkante für Desorptionsluft ist durch das Bezugszeichen 28 angedeutet, wobei eine Reinluftklappe mit 30 bezeichnet ist.

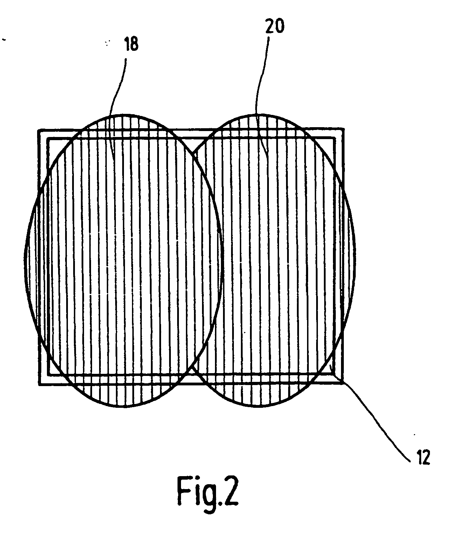

Figur 2 zeigt eine Darstellung, die die Lage eines durch einen ersten Temperatursensor abgedeckten ersten Abschnitts und eines durch einen zweiten Temperatursensor abgedeckten zweiten Abschnitts eines Sorptionsfilterelements veranschaulicht. Gemäß der Darstellung von Figur 2 überlappen sich der durch den ersten Temperatursensor 14 von Figur 1 abgedeckte erste Abschnitt 18 und der durch den zweiten Temperatursensor 16 von Figur 1 abgedeckte zweite Abschnitt 20 des Sorptionsfilterelementes 12.

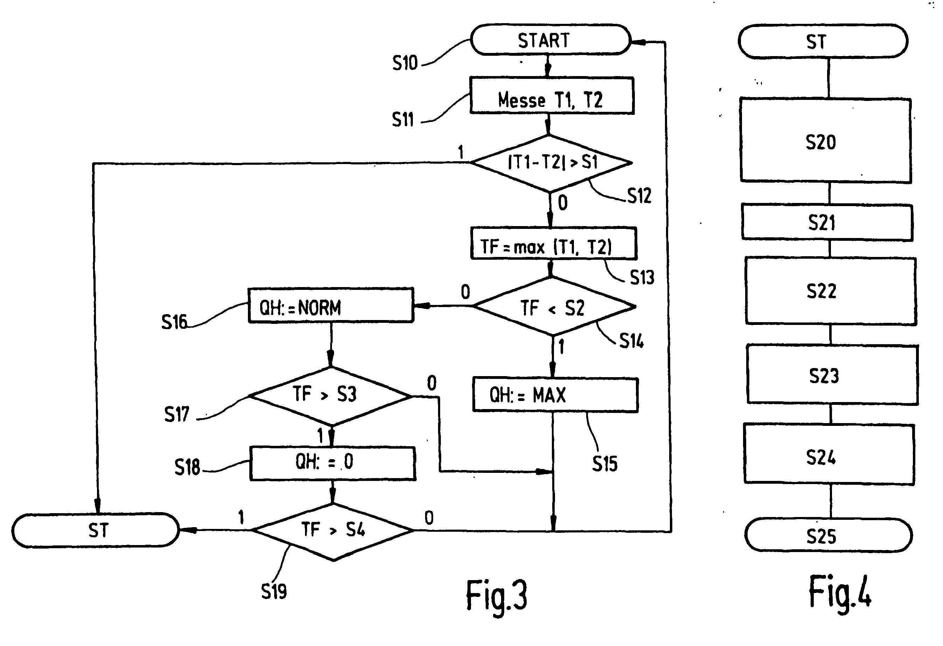

Figur 3 zeigt ein Flussdiagramm, das einen Teil einer Ausführungsform des erfindungsgemäßen Verfahrens veranschaulicht. Der dargestellte Verfahrensablauf kann sich beispielsweise bei dem desorbierbaren Adsorptionsfilter gemäß Figur 1 einstellen. Die durch Figur 3 veranschaulichte Ausführungsform des erfindungsgemäßen Verfahrens beginnt beim Schritt S10. Beim Schritt S11 wird ein einem ersten Abschnitt eines Sorptionsfilterelementes zugeordnetes erstes Temperatursignal T1 und ein einem zweiten Abschnitt des Sorptionsfilterelements zugeordnetes zweites Temperatursignal T2 erzeugt. Beim Schritt S12 wird der Betrag der Differenz T1-T2 mit einem ersten Schwellenwert S1 verglichen, der je nach Anwendungsfall gewählt werden kann. Sofern der Betrag der Differenz T1-T2 größer als der erste Schwellenwert S1 ist, wird in einen Störungsmodus ST gewechselt, der anhand von Figur 4 näher erläutert wird. Wenn der Betrag der Differenz T1-T2 kleiner als der erste Schwellenwert S1 ist, wird zum Schritt S13 verzweigt. Im Schritt S13 wird die Maximumtemperatur TF durch Bestimmung des Maximums des ersten Temperatursignals T1 und des zweiten Temperatursignals T2 bestimmt. Anschließend wird zum Schritt S14 verzweigt. Im Schritt S14 wird überprüft, ob die Maximumtemperatur TF kleiner als ein zweiter Schwellenwert S2 ist, der beispielsweise auf 150°C eingestellt sein kann. Sofern die Maximumtemperatur TF kleiner als der zweite Schwellenwert S2 ist, wird zum Schritt S15 verzweigt. Im Schritt S15 wird die Heizleistung QH auf einen Maximalwert MAX gesetzt. Anschließend wird zurück zum Schritt S10 verzweigt, bei dem der in Figur 3 dargestellte Verfahrensablauf beginnt. Sofern beim Schritt S14 festgestellt wird, dass die Maximumtemperatur TF nicht kleiner als der zweite Schwellenwert S2 ist, wird zum Schritt S16 verzweigt. Im Schritt S16 wird die Heizleistung QH auf einen Normwert NORM eingestellt. Anschließend wird zum Schritt S17 verzweigt. Im Schritt S17 wird die aktuelle Maximumtemperatur TF mit einem dritten Schwellenwert S3 verglichen, der beispielsweise auf 200°C eingestellt sein kann. Sofern die Maximumtemperatur TF nicht größer als der dritte Schwellenwert S3 ist, wird zum Schritt S10 verzweigt und der in Figur 3 dargestellte Verfahrensablauf beginnt erneut. Falls beim Schritt S17 festgestellt wird, dass die Maximumtemperatur TF größer als der dritte Schwellenwert S3 ist wird zum Schritt S18 verzweigt. Im Schritt S18 wird die Heizleistung QH verringert, und zwar auf Null. Anschließend wird zum Schritt S19 verzweigt, bei dem die aktuelle Maximumtemperatur TF mit einem vierten Schwellenwert S4 verglichen wird, der beispielsweise auf 220°C eingestellt sein kann. Wenn beim Schritt S19 festgestellt wird, dass die Maximumtemperatur TF größer als der vierte Schwellenwert S4 ist, wird in den Störungsmodus ST gewechselt, der anhand von Figur 4 erläutert wird. Anderenfalls wird zurück zum Schritt S10 verzweigt und der in Figur 3 dargestellte Verfahrensablauf beginnt erneut.

Figur 4 zeigt ein Flussdiagramm, das den Betrieb in einem Störungsmodus veranschaulicht. Dabei ist den in Figur 4 dargestellten Schritten die folgende Bedeutung zugeordnet:
- S20:: Stelle Luftsteuerung auf Modus "Desorption" ein.
- S21:: Setze Heizleistung QH auf Null.
- S22:: Stelle Luftzufuhr zum Sorptionsfilterelement für eine Zeitspannung Δt von beispielsweise 2 Minuten ab.
- S23:: Erzeuge Warnsignal.
- S24:: Verhindere weitere Desorptionsmodi, das heißt stelle Desorption auf Dauerstop.
- S25:: Ende

In dem in Figur 4 dargestellten Störungsmodus wird entweder von dem in Figur 3 dargestellten Schritt S12 oder von dem ebenfalls in Figur 3 dargestellten Schritt S19 verzweigt. Beim Schritt S20 wird die Luftsteuerung auf den Modus "Desorption" gestellt. Dies dient dazu, zumindest einen Großteil der adsorbierten Gase auszutreiben und an die Umgebung abzugeben. Außerdem ist in diesem Betriebsmodus vorzugsweise die Luftdurchströmung des Filters geringer als im Adsorptionsmodus, so dass die Gefahr einer reaktiven Aufheizung des Filters durch Sauerstoffzufuhr verringert ist. Im Schritt S21 wird die Heizleistung QH auf Null gesetzt, um eine weitere Erwärmung des Sorptionsfilterelementes zu vermeiden. Im Schritt S22 wird die Frischluftzufuhr, beispielsweise durch das Abschalten eines entsprechenden Gebläses, zu dem Sorptionsfilterelement unterbunden, beispielsweise für eine Zeitspanne Δt von 2 Minuten. Die Zeitspanne Δt wird vorzugsweise derart gewählt, dass das Temperaturfenster mit einer erhöhten Neigung zur reaktiven Selbstaufheizung des Sorptionsfilterelements sicher wieder verlassen wird. Beim Schritt S23 wird ein Warnsignal erzeugt, beispielsweise indem eine in einem Armaturenbrett vorgesehene Warnlampe aktiviert wird. Beim Schritt S24 werden weitere Desorptionsmodi verhindert, beispielsweise indem die Desorption auf Dauerstop gestellt wird. Anschließend endet der in Figur 4 dargestellte Verfahrensablauf beim Schritt S25.

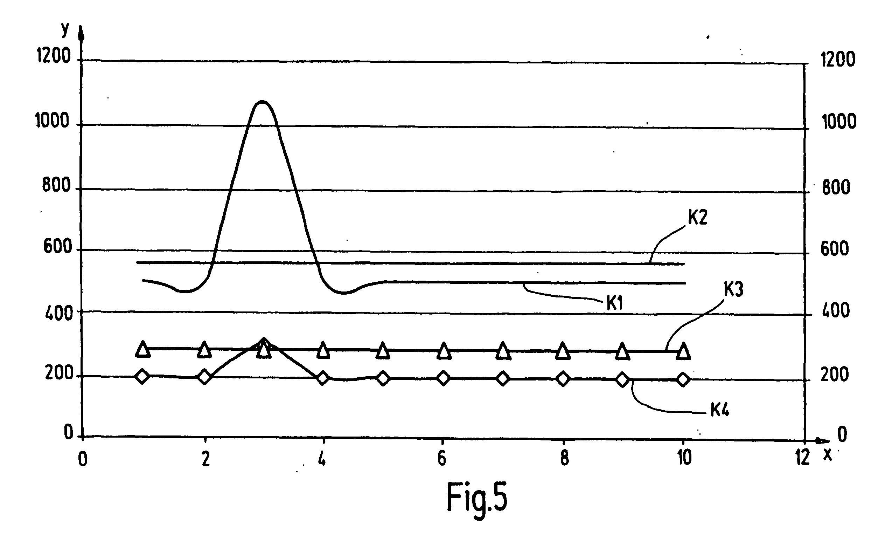

Figur 5 zeigt einen Graph, der eine Temperaturverteilung mit einem Hotspot, die zugehörige Temperaturstrahlung, die zugehörige Leistungsverteilung und die mittlere Leistung für verschiedene Flächenelemente zeigt. Dabei ist auf der X-Achse die Nummer von jeweiligen Flächenelementen aufgetragen, während auf der Y-Achse die Temperaturverteilung in °C beziehungsweise ein Maß für die abgestrahlte Leistung aufgetragen ist. Die Kurve K1 zeigt ein Beispiel für eine Leistungsverteilung beim Auftreten eines Hotspots. Die Kurve K2 zeigt die mittlere Leistungsverteilung. Die Kurve K3 zeigt die zugehörige vom Sensor gemessene mittlere Temperatur. Die Kurve K4 zeigt die Temperaturverteilung, wobei der Hotspot beim Flächenelement Nummer 3 auftritt. Die T⁴-Charakteristik der abgestrahlten Leistung bewirkt, dass schon bei kleinflächigen Erwärmungen, zum Beispiel durch irreguläre exotherme Reaktionen, das Gesamtsignal desjenigen Temperatursensors dominiert, in dessen Blickfeld diese Zone liegt. Wenn sich beispielsweise, wie in Figur 4 dargestellt, nur ein zehntel der überwachten Fläche auf eine ungewollt höhere Temperatur von 300°C erwärmt, anstelle der regulären 200°C, erhöht sich die entsprechend dem T⁴-Gesetz abgestrahlte Leistung so stark, dass sich der Temperatursensor, beispielsweise in Form eines Thermopile-Temperatursensors, auf einen Temperaturmittelwert entsprechend K3 von zirka 285°C einstellt. Dadurch wird eine große Differenz zwischen den Temperatursignalen der beiden Temperatursensoren hervorgerufen und das System kann sofort abgeschaltet und beispielsweise in den in Figur 3 dargestellten Störungsmodus überführt werden.

Durch die Erfindung lassen sich insbesondere die folgenden Vorteile erzielen:
- Der oder die Temperatursensoren sind am Gehäuse angeordnet und können daher unabhängig vom Filter ausgetauscht werden.
- Die Temperatursensoren können auf der Reinluftseite angeordnet werden und sind dann vor Verschmutzungen geschützt.
- Die beiden Temperatursignale von zwei Temperatursensoren ermöglichen die Darstellung eines redundanten Messsystems mit Fehlererkennung, beispielsweise durch eine Einzelsignalauswertung und/oder eine Differenzbildung.
- Bei möglichen inhomogenen Temperaturverteilungen richtet sich das Messsignal als Folge der stark progressiven T⁴-Charakteristik der abgestrahlten Wärmeleistung im Wesentlichen nach der höchsten im Sichtfeld liegenden Temperatur.
- Durch zwei getrennte Sichtfelder können Inhomogenitäten der Temperaturverteilung erkannt werden.
- Die gesamte aufheizbare Struktur kann erfasst werden.
- Eine typische Zeitkonstante für die Temperaturmessung beträgt zirka 40 ms und ist damit deutlich kürzer, als die Zeitkonstante zu erwartender Temperaturänderungen während der Desorption.

## Patentansprüche

1. Desorbierbarer Adsorptionsfilter, insbesondere für eine Kraftfahrzeugklimaanlage, mit einem Gehäuse (10), in dem zumindest ein Sorptionsfilterelement (12) angeordnet ist, das in einem Desorptionsmodus zur Desorption erwärmbar ist, und mit einem ersten Temperatursensor, mer zumindest im Desorptionsmodus die Temperatur von zumindest einem ersten Abschnitt (18) des Sorptionsfilterelements (12) erfasst, **dadurch gekennzeichnet, dass** der Temperatursensor (14) berührungslos arbeitet und an dem Gehäuse (10) angeordnet ist.

2. Desorbierbarer Adsorptionsfilter nach Anspruch 1, **dadurch gekennzeichnet, dass** ein zweiter berührungslos arbeitender Temperatursensor (16) vorgesehen ist, der zumindest im Desorptionsmodus die Temperatur von zumindest einem zweiten Abschnitt (20) des zumindest einen Sorptionsfilterelements (12) erfasst.

3. Desorbierbarer Adsorptionsfilter nach einem der vorhergehenden Ansprüche, **dadurch gekennzeichnet, dass** der erste Abschnitt (18) und der zweite Abschnitt (20) aneinander angrenzen oder überlappen.

4. Desorbierbarer Adsorptionsfilter nach einem der vorhergehenden Ansprüche, **dadurch gekennzeichnet, dass** zumindest der erste berührungslos arbeitende Temperatursensor (14) ein Thermopilesensor ist.

5. Desorbierbarer Adsorptionsfilter nach einem der vorhergehenden Ansprüche in Kombination mit Anspruch 2, **dadurch gekennzeichnet, dass** der erste berührungslos arbeitende Temperatursensor (14) und der zweite berührungslos arbeitende Temperatursensor (16) durch einen Dualzonen-Thermopilesensor gebildet sind.

6. Desorbierbarer Adsorptionsfilter nach Anspruch 5, **dadurch gekennzeichnet, dass** der Dualzonen-Thermopilesensor zwei Auswerteeinheiten aufweist.

7. Desorbierbarer Adsorptionsfilter nach einem der vorhergehenden Ansprüche, **dadurch gekennzeichnet, dass** zumindest der erste berührungslos arbeitende Temperatursensor (14) auf einer Reinluftseite des zumindest einen Sorptionsfilterelements (12) angeordnet ist.

8. Desorbierbarer Adsorptionsfilter nach einem der vorhergehenden Ansprüche in Kombination mit Anspruch 2, **dadurch gekennzeichnet, dass** er eine Steuerungs- und/oder Regelungseinrichtung aufweist, der ein erstes Temperatursignal (T1) des ersten berührungslos arbeitenden Temperatursensors (14) und ein zweites Temperatursignal (T2) des zweiten berührungslos arbeitenden Temperatursensors (16) zugeführt wird, und dass die Steuerungs- und/oder Regelungseinrichtung zumindest im Desorptionsmodus die Temperatur des zumindest einen Sorptionsfilterelements (12) auf der Grundlage des ersten Temperatursignals (T1) und des zweiten Temperatursignals (T2) steuert und/oder regelt.

9. Desorbierbarer Adsorptionsfilter nach Anspruch 8, **dadurch gekennzeichnet, dass** die Steuerungs- und/oder Regelungseinrichtung zumindest im Desorptionsmodus die Temperatur des zumindest einen Sorptionsfilterelements (12) auf der Grundlage einer Differenz (T1-T2) aus dem ersten Temperatursignal (T1) und dem zweiten Temperatursignal (T2) steuert und/oder regelt.

10. Desorbierbarer Adsorptionsfilter nach Anspruch 9, **dadurch gekennzeichnet, dass** die Steuerungs- und/oder Regelungseinrichtung den Betrag der Differenz (T1-T2) aus dem ersten Temperatursignal (T1) und dem zweiten Temperatursignal (T2) mit einem ersten Schwellenwert (S1) vergleicht, und dass die Steuerungs- und/oder Regelungseinrichtung in einen Störungsmodus wechselt, wenn der Betrag der Differenz (T1-T2) aus dem ersten Temperatursignal (T1) und dem zweiten Temperatursignal (T2) größer als der ersten Schwellenwert (S1) ist.

11. Desorbierbarer Adsorptionsfilter nach einem der vorhergehenden Ansprüche 8 bis 10, **dadurch gekennzeichnet, dass** die Steuerungs- und/oder Regelungseinrichtung eine Maximumtemperatur (TF) aus dem ersten Temperatursignal (T1) und dem zweiten Temperatursignal (T2) bestimmt.

12. Desorbierbarer Adsorptionsfilter nach Anspruch 11, **dadurch gekennzeichnet, dass** die Steuerungs- und /oder Regelungseinrichtung die Maximumtemperatur (TF) mit einem zweiten Schwellenwert (S2) vergleicht, und dass die Steuerungs- und/oder Regelungseinrichtung die die Erwärmung des zumindest einen Sorptionsfilterelements (12) bewirkende Heizleistung (QH) auf einen Normwert (NORM) setzt, wenn die Maximumtemperatur (TF) größer als der zweite Schwellenwert (S2) ist, während die Steuerungs- und/oder Regelungseinrichtung die Heizleistung (QH) auf einen Maximalwert (MAX) setzt, wenn die Maximumtemperatur (TF) kleiner als der zweite Schwellenwert (S2) ist.

13. Desorbierbarer Adsorptionsfilter nach Anspruch 12, **dadurch gekennzeichnet, dass** die Steuerungs- und/oder Regelungseinrichtung erneut die Maximumtemperatur (TF) bestimmt, nachdem sie die Heizleistung (QH) auf den Normwert (NORM) gesetzt hat, um die Maximumtemperatur (TF) mit einem dritten Schwellenwert (S3) zu vergleichen, und dass die Steuerungs- und/oder Regelungseinrichtung die Heizleistung (QH) verringert, wenn die Maximumtemperatur (TF) größer als der dritte Schwellenwert (S3) ist.

14. Desorbierbarer Adsorptionsfilter nach Anspruch 13, **dadurch gekennzeichnet, dass** die Steuerungs- und/oder Regelungseinrichtung erneut die Maximumtemperatur (TF) bestimmt, nachdem sie die Heizleistung verringert hat, um die Maximumtemperatur (TF) mit einem vierten Schwellenwert (S4) zu vergleichen, und dass die Steuerungs- und/oder Regelungseinrichtung in den Störungsmodus wechselt, wenn die Maximumtemperatur (TF) größer als der vierte Schwellenwert (S4) ist.

15. Desorbierbarer Adsorptionsfilter nach einem der vorhergehenden Ansprüche 10 bis 14, **dadurch gekennzeichnet, dass** die Steuerungs- und/oder Regelungseinrichtung in dem Störungsmodus eine Luftzufuhr zu dem zumindest einen Sorptionsfilterelement (12) zumindest für eine vorherbestimmte Zeitspanne (At) verhindert oder zumindest einschränkt.

16. Desorbierbarer Adsorptionsfilter nach einem der vorhergehenden Ansprüche 10 bis 15, **dadurch gekennzeichnet, dass** die Steuerungs- und/oder Regelungseinrichtung in dem Störungsmodus ein Warnsignal ausgibt und/oder weitere Desorptionsmodi verhindert.

17. Desorbierbarer Adsorptionsfilter nach einem der vorhergehenden Ansprüche 14 bis 16, **dadurch gekennzeichnet, dass** der Störmodus in zwei Teilmodi unterteilt ist, wobei der erste Teilmodus einen Dauerstop mit einer akustischen und/oder optischen Störmeldung umfasst und angewendet wird, wenn der erste Schwellenwert überschritten wird, und wobei der zweite Teilmodus bei der Überschreitung des vierten Schwellenwertes angewendet wird und eine schrittweise Absenkung des zweiten und dritten Schwellenwertes und einen Rücksprung zum normalen Steuerungs- und/oder Regelungsmodus umfasst.

18. Desorbierbarer Adsorptionsfilter nach einem der vorhergehenden Ansprüche 8 bis 17, **dadurch gekennzeichnet, dass** die Steuerungs- und/oder Regelungseinrichtung einen PID-Regler aufweist, der die Heizleistung (QH) durch Pulsweitenmodulation entsprechend einem oder mehreren Schwellenwerten (S1, S2, S3, S4) regelt.

19. Desorbierbarer Adsorptionsfilter nach Anspruche 18, **dadurch gekennzeichnet, dass** die Steuerungs- und/oder Regelungseinrichtung eine getrennte Auswertung des D-Anteils vornimmt, um auf Anomalien in der zeitlichen Erwärmungscharakteristik des zumindest einen Sorptionsfilterelements (12) zu schließen.

20. Fahrzeugklimaanlage **gekennzeichnet durch** einen desorbierbaren Adsorptionsfilter nach einem der vorhergehenden Ansprüche.

21. Verfahren zum Steuern und/oder Regeln des Desorptionsvorgangs eines desorbierbaren Adsorptionsfilters, insbesondere eines desorbierbaren Adsorptionsfilters nach einem der Ansprüche 1 bis 19, in dem zumindest ein Sorptionsfilterelement (12) angeordnet ist, das in einem Desorptionsmodus zur Desorption erwärmt wird, **dadurch gekennzeichnet, dass** es die folgenden Schritte umfasst:
a) berührungsloses Erfassen der Temperatur (T1) von zumindest einem ersten Abschnitt (18) des zumindest einen Sorptionsfilterelements (12) und Steuern und/oder Regeln der Temperatur des zumindest einen Sorptionsfilterelements (12) durch Einstellen der Heizleistung (QH), die die Erwärmung des zumindest einen Sorptionsfilterelements (12) bewirkt,
b) berührungsloses Erfassen der Temperatur (T2) eines zweiten Abschnitts (20) des zumindest einen Sorptionsfilterelements (12), und
c) Bilden einer Differenz (T1-T2) aus der ersten Temperatur (T1) und der zweiten Temperatur (T2) und Steuern und/oder Regeln der Temperatur des zumindest einen Sorptionsfilterelements (12) auf der Grundlage dieser Differenz (T1-T2).

22. Verfahren nach Anspruch 21, **dadurch gekennzeichnet, dass** es weiterhin die folgenden Schritte umfasst:
d) Vergleichen des Betrages der Differenz (T1-T2) aus dem ersten Temperatursignal (T1) und dem zweiten Temperatursignal (T2) mit einem ersten Schwellenwert (S1), und
e) Wechseln in einen Störungsmodus, wenn der Betrag der Differenz (T1-T2) aus dem ersten Temperatursignal (T1) und dem zweiten Temperatursignal (T2) größer als der ersten Schwellenwert (S1) ist.

23. Verfahren nach einem der Ansprüche 21 oder 22, **dadurch gekennzeichnet, dass** es weiterhin den folgenden Schritt umfasst:
f) Bestimmen einer Maximumtemperatur (TF) aus dem ersten Temperatursignal (T1) und dem zweiten Temperatursignal (T2).

24. Verfahren nach Anspruch 23, **dadurch gekennzeichnet, dass** es weiterhin die folgenden Schritte umfasst:
g) Vergleichen der Maximumtemperatur (TF) mit einem zweiten Schwellenwert (S2), und
h) Setzen der die Erwärmung des zumindest einen Sorptionsfilterelements (12) bewirkenden Heizleistung (QH) auf einen Normwert (NORM), wenn die Maximumtemperatur (TF) größer als der zweite Schwellenwert (S2) ist, und Setzen der Heizleistung (QH) auf einen Maximalwert (MAX), wenn die Maximumtemperatur (TF) kleiner als der zweite Schwellenwert (S2) ist.

25. Verfahren nach Anspruch 24, **dadurch gekennzeichnet, dass** es weiterhin die folgenden Schritte umfasst:
i) erneutes Bestimmen der Maximumtemperatur (TF), nachdem die Heizleistung (QH) auf den Normwert (NORM) gesetzt wurde,
j) Vergleichen der Maximumtemperatur (TF) mit einem dritten Schwellenwert (S3), und
k) Verringern der Heizleistung (QH), wenn die Maximumtemperatur (TF) größer als der dritte Schwellenwert (S3) ist.

26. Verfahren nach einem der Ansprüche 23 bis 25, **dadurch gekennzeichnet, dass** es weiterhin die folgenden Schritte umfasst:
l) erneutes Bestimmen der Maximumtemperatur (TF), nachdem die Heizleistung verringert wurde,
m) Vergleichen der Maximumtemperatur (TF) mit einem vierten Schwellenwert (S4), und
n) Wechselnd in den Störungsmodus, wenn die Maximumtemperatur (TF) größer als der vierte Schwellenwert (S4) ist.

27. Verfahren nach einem der Ansprüche 22 bis 26, **dadurch gekennseichnet,** dass es weiterhin den folgenden Schritt umfasst:
o) Verhindern oder zumindest Einschränken einer Luftzufuhr zu dem zumindest einen Sorptionsfilterelement (12), zumindest für eine vorherbestimmte Zeitspanne (Δt), in dem Störungsmodus.

28. Verfahren nach einem der Ansprüche 22 bis 27, **dadurch gekennzeichnet, dass** es weiterhin den folgenden Schritt umfasst:
p) Ausgeben eines Warnsignals und/oder Verhindern weiterer Desorptionsmodi, in dem Störungsmodus.

29. Verfahren nach einem der Ansprüche 26 bis 28, **dadurch gekennzeichnet, dass** es weiterhin den folgenden Schritt umfasst:
q) Aufteilen des Störmodus in zwei Teilmodi, wobei der erste Teilmodus einen Dauerstop mit einer akustischen und/oder optischen störmeldung umfasst und angewendet wird, wenn der erste Schwellenwert überschritten wird, und wobei der zweite Teilmodus bei der Überschreitung des vierten Schwellenwertes angewendet wird und eine schrittweise Absenkung des zweiten und dritten Schwellenwertes und einen Rücksprung zum normalen Steuerungs- und/oder Regelungsmodus umfasst.

30. Verfahren nach einem der Ansprüche 22 bis 29, **dadurch gekennzeichnet, dass** ein PID-Regler verwendet wird, um die Heizleistung (QH) durch Pulsweitenmodulation entsprechend einem oder mehreren Schwellenwerten (S1, S2, S3, S4) zu regeln.

31. Verfahren nach Anspruch 30, **dadurch gekennzeichnet, dass** eine getrennte Auswertung des D-Anteils vorgenommen wird, um auf Anomalien in der zeitlichen Erwärmungscharakteristik des zumindest einen Sorptionsfilterelements (12) zu schließen.

## Claims

1. Desorbable adsorption filter, in particular applicable for a vehicle air conditioning system, comprising a housing (10), in which at least one sorption filter element (12) is arranged that can be heated for desorption in a desorption mode, and comprising a first temperature sensor detecting at least in the desorption mode the temperature of at least one first section (18) of the sorption filter element (12), **characterized in that** the temperature sensor (14) is contactless operating and arranged on the housing (10).

2. Desorbable adsorption filter according to claim 1, **characterized in that** a second contactless operating temperature sensor (16) is provided which detects at least in the desorption mode the temperature of at least a second section (20) of the at least one sorption filter element (12).

3. Desorbable adsorption filter according to any one of the preceding claims, **characterized in that** the first section (18) and the second section (20) abut or overlap one another.

4. Desorbable adsorption filter according to any one of the preceding claims, **characterized in that** at least the first contactless operating temperature sensor (14) is a thermopile sensor.

5. Desorbable adsorption filter according to any one of the preceding claims in combination with claim 2, **characterized in that** the first contactless operating temperature sensor (14) and the second contactless operating temperature sensor (16) are formed by a dual zone thermopile sensor.

6. Desorbable adsorption filter according to claim 5, **characterized in that** the dual zone thermopile sensor comprises two evaluation units.

7. Desorbable adsorption filter according to any one of the preceding claims, **characterized in that** at least the first contactless operating temperature sensor (14) is arranged on the clean air side of the at least one sorption filter element (12).

8. Desorbable adsorption filter according to any one of the preceding claims in combination with claim 2, **characterized in that** it comprises a control and/or regulation system to which a first temperature signal (T1) from the first contactless operating temperature sensor (14) and a second temperature signal (T2) from the second contactless operating temperature sensor (16) is supplied, and that the control and/or regulation system controls and/or regulates at least in the desorption mode the temperature of the at least one sorption filter element (12) on the basis of the first temperature signal (T1) and the second temperature signal (T2).

9. Desorbable adsorption filter according to claim 8, **characterized in that** the control and/or regulation system controls and/or regulates at least in the desorption mode the temperature of the at least one sorption filter element (12) on the basis of a difference (T1-T2) between the first temperature signal (T1) and the second temperature signal (T2).

10. Desorbable adsorption filter according to claim 9, **characterized in that** the control and/or regulation system compares the amount of the difference (T1-T2) between the first temperature signal (T1) and the second temperature signal (T2) to a first threshold value (S1), and that the control and/or regulation system switches into a fault mode when the amount of the difference (T1-T2) between the first temperature signal (T1) and the second temperature signal (T2) is greater than the first threshold value (S1).

11. Desorbable adsorption filter according to any one of the preceding claims 8 to 10, **characterized in that** the control and/or regulation system determines a maximum temperature (TF) from the first temperature signal (T1) and the second temperature signal (T2).

12. Desorbable adsorption filter according to claim 11, **characterized in that** the control and/or regulation system compares the maximum temperature (TF) to a second threshold value (S2), and that the control and/or regulation system sets the heating power (QH) responsible for the heating of the at least one sorption filter element (12) to a standard value (NORM) when the maximum temperature (TF) is greater than the second threshold value (S2), whereas the control and/or regulation system sets the heating power (QH) to a maximum value (MAX) when the maximum temperature (TF) is less than the second threshold value (S2).

13. Desorbable adsorption filter according to claim 12, **characterized in that** the control and/or regulation system redetermines the maximum temperature (TF) after having set the heating power (QH) to the standard value (NORM), in order to compare the maximum temperature (TF) to a third threshold value (S3), and that the control and/or regulation system reduces the heating power (QH) when the maximum temperature (TF) is greater than the third threshold value (S3).

14. Desorbable adsorption filter according to claim 13, **characterized in that** the control and/or regulation system redetermines the maximum temperature (TF) after having reduced the heating power, in order to compare the maximum temperature (TF) to a forth threshold value (S4), and that the control and/or regulation system switches into the fault mode when the maximum temperature (TF) is greater than the forth threshold value (S4).

15. Desorbable adsorption filter according to any one of the preceding claims 10 to 14, **characterized in that** the control and/or regulation system inhibits or at least restricts in the fault mode an air supply to the at least one sorption filter element (12) at least for a predetermined time period (Δt).

16. Desorbable adsorption filter according to any one of the preceding claims 10 to 15, **characterized in that** the control and/or regulation system emits in the fault mode a warning signal and/or inhibits other desorption modes.

17. Desorbable adsorption filter according to any one of the preceding claims 14 to 16, **characterized in that** the fault mode is divided into two submodes with the first submode comprising a permanent stop with an acoustic and/or optic fault message and being used when the first threshold value is exceeded, and with the second submode being used when the forth threshold value is exceeded and comprising a gradual reduction of the second and third threshold value and a return into the normal control and/or regulation mode.

18. Desorbable adsorption filter according to any one of the preceding claims 8 to 17, **characterized in that** the control and/or regulation system comprises a PID-regulator for regulating the heating power (QH) by pulse width modulation according to one or multiple threshold values (S1, S2, S3, S4).

19. Desorbable adsorption filter according to claim 18, **characterized in that** the control and/or regulation system executes a separate evaluation of the D-portion in order to identify anomalies in the time-referenced heating characteristic of the at least one sorption filter element (12).

20. Vehicle air conditioning system, **characterized by** a desorbable adsorption filter according to any one of the preceding claims.

21. Method for controlling and/or regulating the process of desorption of a desorbable adsorption filter, in particular a desorbable adsorption filter according to any one of claims 1 to 19, comprising at least one sorption filter element (12) which is heated for desorption in a desorption mode, **characterized in that** it comprises the following steps:
a) contactless detecting the temperature (T1) of at least one first section (18) of the at least one sorption filter element (12) and controlling and/or regulating the temperature of the at least one sorption filter element (12) by adjusting the heating power (QH) which causes the heating of the at least one sorption filter element (12),
b) contactless detecting the temperature (T2) of a second section (20) of the at least one sorption filter element (12), and
c) calculating the difference (T1-T2) between the first temperature (T1) and the second temperature (T2) and controlling and/or regulating the temperature of the at least one sorption filter element (12) on the basis of said difference (T1-T2).

22. Method according to claim 21, **characterized in that** it further comprises the following steps:
d) comparing the amount of the difference (T1-T2) between the first temperature signal (T1) and the second temperature signal (T2) to a first threshold value (S1), and
e) switching into a fault mode when the amount of the difference (T1-T2) between the first temperature signal (T1) and the second temperature signal (T2) is greater than the first threshold value (S1).

23. Method according to one of claims 21 or 22, **characterized in that** it further comprises the following step:
f) determining a maximum temperature (TF) from the first temperature signal (T1) and the second temperature signal (T2).

24. Method according to claim 23, **characterized in that** it further comprises the following steps:
g) comparing the maximum temperature (TF) to a second threshold value (S2), and
h) setting the heating power (QH) causing the heating of the at least one sorption filter element (12) to a standard value (NORM) when the maximum temperature (TF) is greater than the second threshold value (S2), and setting the heating power (QH) to a maximum value (MAX) when the maximum temperature (TF) is less than the second threshold value (S2).

25. Method according to claim 24, **characterized in that** it further comprises the following steps:
i) redetermining the maximum temperature (TF) after having set the heating power (QH) to the standard value (NORM),
j) comparing the maximum temperature (TF) to a third threshold value (S3), and
k) reducing the heating power (QH) when the maximum temperature (TF) is greater than the third threshold value (S3).

26. Method according to one of claims 23 to 25, **characterized in that** it further comprises the following steps:
I) redetermining the maximum temperature (TF) after having reduced the heating power,
m) comparing the maximum temperature (TF) to a forth threshold value (S4), and
n) switching into the fault mode when the maximum temperature (TF) is greater than the forth threshold value (S4).

27. Method according to one of claims 22 to 26, **characterized in that** it further comprises the following step:
o) inhibiting or at least restricting an air supply to the at least one sorption filter element (12), at least for a predetermined time period (Δt), in the fault mode.

28. Method according to one of claims 22 to 27, **characterized in that** it further comprises the following step:
p) emitting a warning signal and/or inhibiting other desorption modes, in the fault mode.

29. Method according to one of claims 26 to 28, **characterized in that** it further comprises the following step:
q) dividing the fault mode into two submodes, with the first submode comprising a permanent stop with an acoustic and/or optic fault message and being used when the first threshold value is exceeded, and with the second submode being used when the forth threshold value is exceeded and comprising a gradual reduction of the second and third threshold value and a return into the normal control and/or regulation mode.

30. Method according to one of claims 22 to 29, **characterized in that** a PID-regulator is used in order to regulate the heating power (QH) by pulse width modulation according to one or multiple threshold values (S1, S2, S3, S4).

31. Method according to claim 30, **characterized in that** a separate evaluation of the D-portion is executed in order to identify anomalies in the time-referenced heating characteristic of the at least one sorption filter element (12).

## Revendications

1. Filtre d'adsorption désorbable, notamment pour une climatisation véhicule, comportant une boîte (10), dans lequel est arrangé au moins un élément de filtre à sorption (12) qui peut être chauffé pour la désorption dans un mode de désorption, et comportant un premier capteur de température pour détecter au moins dans le mode de désorption la température d'au moins une première section (18) de l'élément de filtre à sorption (12), **caractérisé en ce que** le capteur de température (14) fonctionne sans contact et qu'il est arrangé sur la boîte (10).

2. Filtre d'adsorption désorbable selon la revendication 1, **caractérisé en ce qu'**un deuxième capteur de température (16) à fonctionnement sans contact est prévu qui détecte au moins dans le mode de désorption la température d'au moins une deuxième section (20) de l'au moins un élément de filtre à sorption (12).

3. Filtre d'adsorption désorbable selon l'une des revendications précédentes, **caractérisé en ce que** la première section (18) et la deuxième section (20) sont limitrophes ou se chevauchent.

4. Filtre d'adsorption désorbable selon l'une des revendications précédentes, **caractérisé en ce qu'**au moins le premier capteur de température (14) à fonctionnement sans contact est un capteur à thermopile.

5. Filtre d'adsorption désorbable selon l'une des revendications précédentes en combinaison avec la revendication 2, **caractérisé en ce que** le premier capteur de température (14) à fonctionnement sans contact et le deuxième capteur de température (16) à fonctionnement sans contact sont formés par un capteur à thermopile à zone duale.

6. Filtre d'adsorption désorbable selon la revendication 5, **caractérisé en ce que** le capteur à thermopile à zone duale comporte deux dispositifs d'évaluation.

7. Filtre d'adsorption désorbable selon l'une des revendications précédentes, **caractérisé en ce qu'**au moins le premier capteur de température (14) à fonctionnement sans contact est arrangé sur le côté d'air purifié de l'au moins un élément de filtre à sorption (12).

8. Filtre d'adsorption désorbable selon l'une des revendications précédentes en combinaison avec la revendication 2, **caractérisé en ce qu'**il comporte un système de contrôle et/ou de réglage auquel on transmet un premier signal de température (T1) du premier capteur de température (14) à fonctionnement sans contact et un deuxième signal de température (T2) du deuxième capteur de température (16) à fonctionnement sans contact, et que le système de contrôle et/ou de réglage contrôle et/ou règle au moins dans le mode de désorption la température de l'au moins un élément de filtre à sorption (12) sur la base du premier signal de température (T1) et du deuxième signal de température (T2).

9. Filtre d'adsorption désorbable selon la revendication 8, **caractérisé en ce que** le système de contrôle et/ou de réglage contrôle et/ou règle au moins dans le mode de désorption la température de l'au moins un élément de filtre à sorption (12) sur la base d'une différence (T1-T2) entre le premier signal de température (T1) et le deuxième signal de température (T2).

10. Filtre d'adsorption désorbable selon la revendication 9, **caractérisé en ce que** le système de contrôle et/ou de réglage compare le montant de la différence (T1-T2) entre le premier signal de température (T1) et le deuxième signal de température (T2) avec une première valeur de seuil (S1), et que le système de contrôle et/ou de réglage passe dans un mode de défaillance si le montant de la différence (T1-T2) entre le premier signal de température (T1) et le deuxième signal de température (T2) est supérieur à la première valeur de seuil (S1).

11. Filtre d'adsorption désorbable selon l'une des revendications précédentes 8 à 10, **caractérisé en ce que** le système de contrôle et/ou de réglage détermine une température maximale (TF) à partir du premier signal de température (T1) et du deuxième signal de température (T2).

12. Filtre d'adsorption désorbable selon la revendication 11, **caractérisé en ce que** le système de contrôle et/ou de réglage compare la température maximale (TF) avec une deuxième valeur de seuil (S2), et que le système de contrôle et/ou de réglage met la puissance thermique (QH) responsable pour l'échauffement de l'au moins un élément de filtre à sorption (12) à une valeur standard (NORM) si la température maximale (TF) est supérieure à la deuxième valeur de seuil (S2), tandis que le système de contrôle et/ou de réglage met la puissance thermique (QH) à une valeur maximale (MAX) si la température maximale (TF) est inférieure à la deuxième valeur de seuil (S2).

13. Filtre d'adsorption désorbable selon la revendication 12, **caractérisé en ce que** le système de contrôle et/ou de réglage détermine de nouveau la température maximale (TF) après avoir mis la puissance thermique (QH) à la valeur standard (NORM) afin de comparer la température maximale (TF) avec une troisième valeur de seuil (S3), et que le système de contrôle et/ou de réglage réduit la puissance thermique (QH) si la température maximale (TF) est supérieure à la troisième valeur de seuil (S3).

14. Filtre d'adsorption désorbable selon la revendication 13, **caractérisé en ce que** le système de contrôle et/ou de réglage détermine de nouveau la température maximale (TF) après avoir réduit la puissance thermique afin de comparer la température maximale (TF) avec une quatrième valeur de seuil (S4), et que le système de contrôle et/ou de réglage passe dans le mode de défaillance si la température maximale (TF) est supérieure à la quatrième valeur de seuil (S4).

15. Filtre d'adsorption désorbable selon l'une des revendications précédentes 10 à 14, **caractérisé en ce que** le système de contrôle et/ou de réglage empêche ou au moins limite dans le mode de défaillance une alimentation en air de l'élément de filtre à sorption (12), au moins pour une période prédéterminée (Δt).

16. Filtre d'adsorption désorbable selon l'une des revendications précédentes 10 à 15, **caractérisé en ce que** le système de contrôle et/ou de réglage émet dans le mode de défaillance un signal d'alarme et/ou empêche d'autres modes de désorption.

17. Filtre d'adsorption désorbable selon l'une des revendications précédentes 14 à 16, **caractérisé en ce que** le mode de défaillance est divisé en deux sous-modes, avec le premier sous-mode comprenant un arrêt continu avec une signalisation de défaut acoustique et/ou optique et étant appliqué lors du dépassement de la première valeur de seuil, et avec le deuxième sous-mode étant appliqué lors du dépassement de la quatrième valeur de seuil et comprenant une réduction progressive de la deuxième et la troisième valeur de seuil et un retour dans le mode de contrôle et/ou de réglage normal.

18. Filtre d'adsorption désorbable selon l'une des revendications précédentes 8 à 17, **caractérisé en ce que** le système de contrôle et/ou de réglage comporte un régulateur PID pour régler la puissance thermique (QH) par modulation d'impulsions en largeur selon une ou plusieurs valeurs de seuil (S1, S2, S3, S4).

19. Filtre d'adsorption désorbable selon la revendication 18, **caractérisé en ce que** le système de contrôle et/ou de réglage effectue une évaluation séparée de la partie D afin d'identifier des anomalies dans la caractéristique d'échauffement par rapport au temps de l'au moins un élément de filtre à sorption (12).

20. Climatisation véhicule, **caractérisée par** un filtre d'adsorption désorbable selon l'une des revendications précédentes.

21. Procédé pour contrôler et/ou régler le procédé de désorption d'un filtre d'adsorption désorbable, notamment d'un filtre d'adsorption désorbable selon l'une des revendications précédentes 1 à 19, dans lequel est arrangé au moins un élément de filtre à sorption (12) qui est chauffé pour la désorption dans un mode de désorption, **caractérisé en ce qu'**il comprend les étapes suivantes :
a) détecter sans contact la température (T1) d'au moins une première section (18) de l'au moins un élément de filtre à sorption (12) et contrôler et/ou régler la température de l'au moins un élément de filtre à sorption (12) par ajustage de la puissance thermique (QH) responsable pour l'échauffement de l'au moins un élément de filtre à sorption (12),
b) détecter sans contact la température (T2) d'une deuxième section (20) de l'au moins un élément de filtre à sorption (12), et
c) calculer la différence (T1-T2) entre la première température (T1) et la deuxième température (T2) et contrôler et/ou régler la température de l'au moins un élément de filtre à sorption (12) sur la base de cette différence (T1-T2).

22. Procédé selon la revendication 21, **caractérisé en ce qu**'il comprend en plus les étapes suivantes :
d) comparer l'amont de la différence (T1-T2) entre le premier signal de température (T1) et le deuxième signal de température (T2) avec une première valeur de seuil (S1), et
e) passer dans un mode de défaillance si l'amont de la différence (T1-T2) entre le premier signal de température (T1) et le deuxième signal de température (T2) est supérieur à la première valeur de seuil (S1).

23. Procédé selon l'une des revendications 21 ou 22, **caractérisé en ce qu**'il comprend en plus l'étape suivante :
f) déterminer une température maximale (TF) à partir du premier signal de température (T1) et du deuxième signal de température (T2).

24. Procédé selon la revendication 23, **caractérisé en ce qu**'il comprend en plus les étapes suivantes :
g) comparer la température maximale (TF) avec une deuxième valeur de seuil (S2), et
h) mettre la puissance thermique (QH) responsable pour l'échauffement de l'au moins un élément de filtre à sorption (12) à une valeur standard (NORM) si la température maximale (TF) est supérieure à la deuxième valeur de seuil (S2), et mettre la puissance thermique (QH) à une valeur maximale (MAX) si la température maximale (TF) est inférieure à la deuxième valeur de seuil (S2).

25. Procédé selon la revendication 24, **caractérisé en ce qu**'il comprend en plus les étapes suivantes :
i) déterminer de nouveau la température maximale (TF) après avoir mis la puissance thermique (QH) à la valeur standard (NORM),
j) comparer la température maximale (TF) avec une troisième valeur de seuil (S3), et
k) réduire la puissance thermique (QH) si la température maximale (TF) est supérieure à la troisième valeur de seuil (S3).

26. Procédé selon l'une des revendications 23 à 25, **caractérisé en ce qu**'il comprend en plus les étapes suivantes :
l) déterminer de nouveau la température maximale (TF) après avoir réduit la puissance thermique,
m) comparer la température maximale (TF) avec une quatrième valeur de seuil (S4), et
n) passer dans le mode de défaillance si la température maximale (TF) est supérieure à la quatrième valeur de seuil (S4).

27. Procédé selon l'une des revendications 22 à 26, **caractérisé en ce qu**'il comprend en plus l'étape suivante :
o) empêcher ou au moins limiter une alimentation en air de l'au moins un élément de filtre à sorption (12), au moins pour une période prédéterminée (Δt), dans le mode de défaillance.

28. Procédé selon l'une des revendications 22 à 27, **caractérisé en ce qu**'il comprend en plus l'étape suivante :
p) émettre un signal d'alarme et/ou empêcher d'autres modes de désorption, dans le mode de défaillance.

29. Procédé selon l'une des revendications 26 à 28, **caractérisé en ce qu**'il comprend en plus l'étape suivante :
q) diviser le mode de défaillance en deux sous-modes, avec le premier sous-mode comprenant un arrêt continu avec une signalisation de défaut acoustique et/ou optique et étant appliqué lors du dépassement de la première valeur de seuil, et avec le deuxième sous-mode étant appliqué lors du dépassement de la quatrième valeur de seuil et comprenant une réduction progressive de la deuxième et la troisième valeur de seuil et un retour dans le mode de contrôle et/ou de réglage normal.

30. Procédé selon l'une des revendications 22 à 29, **caractérisé en ce qu'**on utilise un régulateur PID pour régler la puissance thermique (QH) par modulation d'impulsions en largeur selon une ou plusieurs valeurs de seuil (S1, S2, S3, S4).

31. Procédé selon la revendication 30, **caractérisé en ce qu'**on effectue une évaluation séparée de la partie D afin d'identifier des anomalies dans la caractéristique d'échauffement par rapport au temps de l'au moins un élément de filtre à sorption (12).
